# EUROPEAN PATENT SPECIFICATION

(11) **EP 0 918 183 B1**
(45) Date of publication and mention of the grant of the patent: **07.03.2001**
(21) Application number: 98121768.0
(22) Date of filing: 16.11.1998
(51) Int. Cl.: F16L 17/04

(54) **Joint, particularly for fiber-glass pipes**
Rohrverbindung, insbesondere für Rohre aus Glasfasern
Raccord de tuyaux, notamment pour tuyaux en fibre de verre

(30) Priority: 19.11.1997 IT MI970825 U
(43) Date of publication of application: 26.05.1999
(73) Proprietor: Iniziative Industriali S.p.A., 56040 S. Luce (Pisa) (IT)
(72) Inventor: Zingoni, Carlo, 57023 Cecina (Livorno) (IT)
(74) Representative: Rapisardi, Mariacristina

(56) References cited:
- EP-A- 0 784 183
- US-A- 3 637 239
- US-A- 4 601 495

## Description

The present invention relates to an assembly comprising two pipes and a joint, particularly for fiberglass pipes. The connection of fiberglass pipes is particularly difficult because when the joint is tightened, care has to be taken in order to prevent the generation of radial forces that might cause cracks and compromise the integrity of the structure.

Joints adapted to connect fiberglass pipes are known in the market. These joints are composed of two half bodies adapted to grasp protruding edges provided at the ends of the pipes. A different type of joint is provided by inserting the end of one pipe into the end of the other pipe which has a larger diameter adapted to receive the end of the first pipe. These devices notoriously entail that the junction has to be provided in a section of the pipe made on purpose, for example at the edges where the prior art joint is applicable, or at the enlarged diameter section described above.

US-A-4 601 495 discloses a joint comprising one hollow body and seal means and closure means associated therewith.

The joint further comprises locking means interposed between the hollow body and the pipes for preventing an axial motion of the pipes.

The aim of the present invention is to overcome the prior art inconveniences by providing a joint, particularly for fiberglass pipes, which allows to join two tubes regardless whether they are provided with specially adapted parts.

Within this aim, an important object of the invention is to provide a joint which allow to keep the fiberglass pipes and the joint body flush.

A second object of the invention is to provide a fire resistance joint.

A third object of the invention is to provide a joint with a reduced axial size but still with optimal resistance properties.

Still a further object of the invention is to provide an economic, safe and reliable joint.

The above aim as well as these and other objects that will be more apparent hereinafter, are achieved by an assembly comprising two pipes and a joint, particularly for fiberglass pipes as claimed in claim 1.

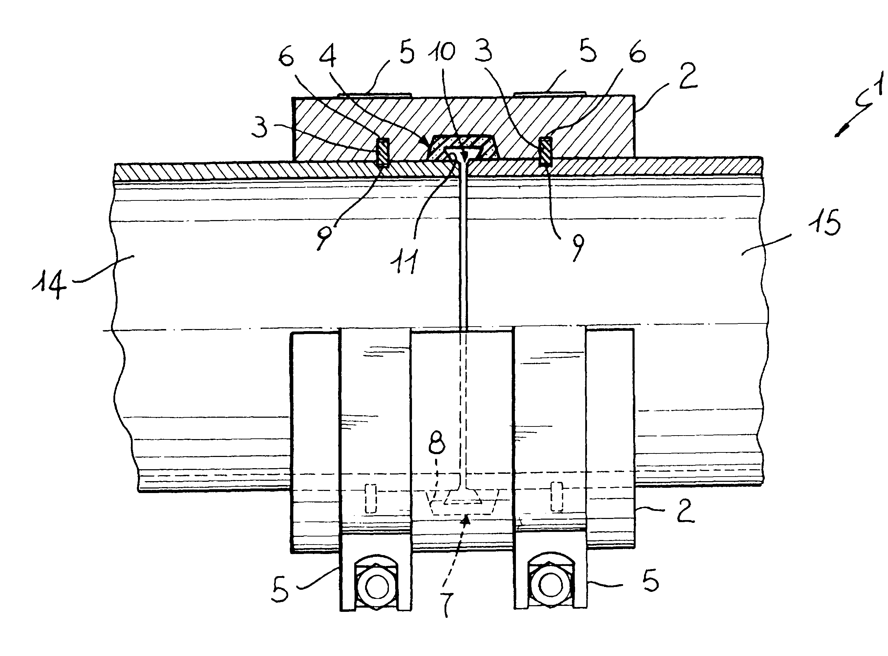

Further characteristics and advantages of the invention will be more apparent by the following description of an embodiment of the invention, illustrated, by way of example in the enclosed drawings wherein the only figure is a partially sectioned front elevated view of the joint according to the invention.

With reference to the cited figure, the joint according to the invention, globally designated by the reference numeral 1, comprises a hollow body 2 accommodating seal means 4 and locking means 3. Closure means 5 close the body of the joint over a first pipe 14 and a second pipe 15.

Hollow body 2 comprises two half-bodies having the same shape. Inside the joint body 2, two first circumferential or annular grooves accommodate locking means 3. The hollow body 2 comprises a circumferential or annular seat 7 adapted to accommodate seal means 4. The side walls 8 of seat 7 are inclined and divergent towards the inside of the joint body 2.

The surface of each pipe to be joined has a second circumferential or annular groove 9 having a depth which is smaller than that of grooves 6 of the joint body 2.

The pipe locking means 3 comprises annular members, namely circlips (Seeger rings) whose seats are the grooves 6 and 9 of the body 2 and pipes 14 and 15. The circlips 3 are arranged in the grooves in order to engage the body 2 and pipes 14 and 15 only through their side surfaces, there being no contact between the base surfaces of the grooves 6 and 9. In this manner the pipes are subjected to a substantially axial force and the circlips are subjected substantially to a shearing stress.

The seal means comprises a seal 4 arranged in the seat 7. The seal 4 is provided with an annular cavity 10 having side walls 11 inclined and convergent towards the inside of body 2 in order that the force exerted by the fluid on the seal 4 has a component at right angles with pipes 14 and 15, thus contributing to the seal. Closure means 5 comprises two metal ties surrounding and fastening the joint at the annular members 3. Annular members 3 prevent pipes 14 and 15 from slipping.

In order to provide a continuity in the material, the body of the joint is made of fiberglass and to ensure a high mechanical resistance the glass fibers have a higher concentration at the internal surface of body 2.

In the present embodiment, the body 2 has an external lining which is fire resistant but according to a different embodiment, the body 2 may also be provided without such lining.

Pipes 14 and 15 have calibrated ends in order to provide a better connection with the seal 4 and all the worked surfaces of the pipes 14 and 15 are lined with a protective and sealing resin.

The joint according to the invention is assembled by providing the grooves 6 on the pipes 14 and 15, in the field, and by calibrating the ends of the pipes. Subsequently, all the worked areas are sealed with the protective resin.

The operation of the joint according to the invention is apparent from the foregoing description. In particular, with reference to the figure, the pipes to be joined are arranged inside the body 2 and locked by annular members 3 arranged in the grooves 6 and 9. The body 2 is kept closed by the ties 5. The fluid flowing in the pipes occupies the entire volume of the annular cavity 10 and exerts a pressure on the inclined walls 11 helping the seal.

The axial forces generated by the passage of the fluid and tending to separate the two ends of pipes 14 and 15 are contrasted by the rings 3 that are subjected to a shear action and do not subject the pipes to radial forces.

It has been seen in practice how the joint according to the invention is particularly advantageous because the pipes can be cut and joined in any point ensuring the material continuity. Furthermore, its properties of small size and easy and rapid assembly make the joint according to the invention particularly advantageous and useful in field work.

The materials employed, as well as the dimensions, may be any according to the specific needs and the state of the art.

## Claims

1. An assembly comprising two pipes (14, 15) and a joint, particularly for fiberglass pipes comprising at least one hollow body (2) comprising two mutually associable half-bodies and seal means (4) adapted to seal the fluid transported by the pipes (14, 15) to be joined, closure means (5) associated therewith adapted to close said hollow body on said pipes and locking means (3) of said pipes interposed between said hollow body (2) and said pipes (14, 15) for preventing an axial motion of said pipes, characterized in that said hollow body (2), made of fiberglass, and said pipes (14, 15) respectively have at least two first inner grooves (6) and two second grooves (9), said first and second grooves being adapted to accomodate said locking means comprising annular members engaging said first and second grooves (6, 9) through their side surfaces only in order to operate by shear forces only.

2. An assembly comprising two pipes and a joint, according to claim 1, characterized in that said first grooves (6) have a greater depth than said second grooves (9).

3. An assembly comprising two pipes and a joint, according to one or more of the preceding claims, characterized in that it comprises metal ties (5) that surround the hollow body (2) and lock it in the working position.

4. An assembly comprising two pipes and a joint, according to one or more of the preceding claims, characterized in that said seal means comprises a seal (4) arranged in a substantially annular seat (7) of said hollow body (2), said seal (4) having a substantially annular cavity (10) having inclined walls (11) converging towards the inside of the hollow body (2) for increasing the contact surface with said pipes and said seat (7) having inclined walls diverging towards the inside of said hollow body.

5. An assembly comprising two pipes and a joint, according to one or more of the preceding claims, characterized in that said half-bodies (2) have the same shape.

6. An assembly comprising two pipes and a joint, according to one or more of the preceding claims, characterized in that said hollow body (2) has a concentration of glass fibers in the region close to the internal surface, greater than the concentration in the region close to the external surface.

7. An assembly comprising two pipes and a joint, according to one or more of the preceding claims, characterized in that said hollow body (2) has a fire resistance lining on the external surface.

8. An assembly comprising two pipes and a joint, according to one or more of the preceding claims, characterized in that said pipes (14,15) to be joined have a calibrated seal region to be connected to said seal means and in particular to said annular seal (4).

9. An assembly comprising two pipes and a joint, according to one or more of the preceding claims, characterized in that the worked regions of the pipes are sealed by means of a coating of protective resin.

## Patentansprüche

1. Anordnung mit zwei Rohren (14, 15) und einer Verbindungseinrichtung, insbesondere für Fiberglas-Rohre, die zumindest einen Hohlkörper (2), der zwei miteinander verbindbare Halbkörper und Dichtungsmittel (4) zum Abdichten eines in den zu verbindenden Rohren (14, 15) transportierten Fluids enthält, dazu zugeordnete Schließmittel (5) zum Verschließen des Hohlkörpers auf den Rohren und zwischen dem Hohlkörper und den Rohren (14, 15) angeordnete Rohr-Festlegungsmittel (3) zum Verhindern einer axialen Bewegung der Rohre enthält, dadurch gekennzeichnet, dass der aus Fiberglas bestehende Hohlkörper (2) und die Rohre (14, 15) zumindest zwei erste innere Nuten (6) bzw. zwei zweite Nuten (9) aufweisen, wobei die ersten und die zweiten Nuten zur Aufnahme der Rohr-Festlegungsmittel ausgestaltet sind, die ringförmige Glieder enthalten, die nur über ihre seitlichen Oberflächen mit den ersten und den zweiten Nuten (6, 9) zusammenwirken, so dass nur Scherkräfte wirken.

2. Anordnung mit zwei Rohren und einer Verbindungseinrichtung nach Anspruch 1, dadurch gekennzeichnet, dass die ersten Nuten (6) eine größere Tiefe aufweisen als die zweiten Nuten (9).

3. Anordnung mit zwei Rohren und einer Verbindungseinrichtung nach einem oder mehreren der vorangehenden Ansprüche, dadurch gekennzeichnet, dass sie Metallbänder (5) enthält, die den Hohlkörper (2) umfassen und ihn in seiner Arbeitsposition festlegen.

4. Anordnung mit zwei Rohren und einer Verbindungseinrichtung nach einem oder mehreren der vorangehenden Ansprüche, dadurch gekennzeichnet, dass die Dichtungsmittel eine Dichtung (4) enthalten, die in einer im Wesentlichen ringförmigen Aufnahme (7) des Hohlkörpers (2) angeordnet ist, wobei die Dichtung (4) eine im Wesentlichen ringförmige Ausnehmung (10) mit zum Innern des Hohlkörpers (2) konvergent geneigten Wänden (11) zum Vergrößern der Kontaktoberfläche mit den Rohren aufweist und die Aufnahme (7) zum Innern des Hohlkörpers divergent geneigte Wände aufweist.

5. Anordnung mit zwei Rohren und einer Verbindungseinrichtung nach einem oder mehreren der vorangehenden Ansprüche, dadurch gekennzeichnet, dass die Halbkörper (2) diegleiche Gestalt aufweisen.

6. Anordnung mit zwei Rohren und einer Verbindungseinrichtung nach einem oder mehreren der vorangehenden Ansprüche, dadurch gekennzeichnet, dass der Hohlkörper (2) eine größere Konzentration von Glasfasern im Bereich nahe seiner inneren Oberfläche aufweist als im Bereich nahe seiner äußeren Oberfläche.

7. Anordnung mit zwei Rohren und einer Verbindungseinrichtung nach einem oder mehreren der vorangehenden Ansprüche, dadurch gekennzeichnet, dass der Hohlkörper (2) auf der äußeren Oberfläche einen feuerfesten Belag aufweist.

8. Anordnung mit zwei Rohren und einer Verbindungseinrichtung nach einem oder mehreren der vorangehenden Ansprüche, dadurch gekennzeichnet, dass die zu verbindenden Rohre (14, 15) einen kalibrierten mit den Dichtungsmitteln, insbesondere mit der ringförmigen Dichtung (4) zu verbindenden Dichtbereich aufweisen.

9. Anordnung mit zwei Rohren und einer Verbindungseinrichtung nach einem oder mehreren der vorangehenden Ansprüche, dadurch gekennzeichnet, dass die bearbeiteten Bereiche der Rohre mittels eines Belages aus Schutzharz abgedichtet sind.

## Revendications

1. Assemblage formé de deux tubes (14, 15) et d'un raccord, en particulier pour des tubes en fibres de verre, comprenant un corps creux (2) formé de deux moitiés susceptibles d'être réunies et d'un joint (4) pour réaliser l'étanchéité vis-à-vis du fluide passant dans les tubes (14, 15), un moyen de fermeture (5) pour fermer le corps creux par-dessus les tubes et un moyen de verrouillage (3) pour les tubes, ce moyen étant placé entre le corps creux (2) et les tubes (14, 15) pour éviter un déplacement axial des tubes,
caractérisé en ce que
le corps creux est réalisé en fibres de verre et les tubes (14, 15) ont respectivement au moins deux premières gorges intérieures (6) et deux secondes gorges (9), les premières et les secondes gorges étant destinées à recevoir le moyen de verrouillage formé par un élément annulaire venant dans la première et la seconde gorge (6, 9) par les surfaces latérales pour travailler uniquement en cisaillement.

2. Assemblage formé de deux tubes et d'un raccord selon la revendication 1,
caractérisé en ce que
la première gorge (6) a une profondeur plus grande que la seconde gorge (9).

3. Assemblage formé de deux tubes et d'un raccord selon l'une ou plusieurs des revendications précédentes,
caractérisé par
un collier métallique (5) entourant le corps creux (2) et le bloquant en position de travail.

4. Assemblage formé de deux tubes et d'un raccord selon l'une ou plusieurs des revendications précédentes,
caractérisé en ce que
le joint est formé d'un joint (4) disposé dans un logement (7) essentiellement annulaire du corps creux 12), et le joint (4) a une cavité essentiellement annulaire (10) avec des parois inclinées (11) convergeant vers l'intérieur du corps creux (2) pour augmenter la surface de contact avec les tubes, le logement (7) ayant des parois inclinées divergeant vers l'intérieur du corps creux.

5. Assemblage formé de deux tubes et d'un raccord selon une ou plusieurs des revendications précédentes,
caractérisé par
des moitiés de corps (2) de même forme.

6. Assemblage formé de deux tubes et d'un raccord selon une ou plusieurs des revendications précédentes,
caractérisé en ce que
dans la région voisine de la surface interne, le corps creux (2) a une concentration de fibres de verre supérieure à celle dans la région voisine de la surface externe.

7. ^{°}) Assemblage formé de deux tubes et d'un raccord selon une ou plusieurs des revendications précédentes,
caractérisé en ce que
la surface externe du corps creux (2) est munie d'un revêtement résistant au feu.

8. Assemblage formé de deux tubes et d'un raccord selon l'une quelconque des revendications précédentes,
caractérisé en ce que
les tubes (14, 15) à réunir ont une région calibrée pour être reliée au joint et en particulier au joint annulaire (4).

9. Assemblage formé de deux tubes et d'un raccord selon l'une quelconque des revendications précédentes,
caractérisé en ce que
les régions usinées des tubes sont scellées à l'aide d'un revêtement de résine protectrice.
